# EUROPEAN PATENT APPLICATION

(11) **EP 4 644 087 A1**
(43) Date of publication of application: **05.11.2025**
(21) Application number: 23911496.0
(22) Date of filing: 28.11.2023
(51) Int. Cl.: B29C 48/80, B29C 48/30, B29C 48/68, B29C 48/82, B29C 48/395

(54) **CONVEYANCE DEVICE AND HEATING DEVICE**

(30) Priority: 28.12.2022 JP 2022211560
(71) Applicant: Sumitomo Heavy Industries Modern, Ltd., Kanagawa 223-8511 (JP)
(72) Inventor: SHIOTA Takahiro, Yokohama-shi, Kanagawa 223-8511 (JP)
(74) Representative: Louis Pöhlau Lohrentz
(86) International application number: PCT/JP2023/042443
(87) International publication number: WO 2024/142715

(57) **Abstract**

A fixing member 109 includes a facing surface 109G that faces an outer peripheral surface 101E of a tubular member 101 and an opposite surface 109H that is positioned on a side opposite to the facing surface 109G. A plurality of flow channels 130 through which a cooling medium passes are provided on the facing surface 109G. Each of a first constituent member 109A and a second constituent member 109B is provided with the plurality of flow channels 130. A plurality of grooves 131 are provided on the facing surface 109G of the fixing member 109 that is positioned at a portion facing the outer peripheral surface 101E of the tubular member 101, and the plurality of flow channels 130 are formed of the plurality of grooves 131.

## Description

### Technical Field

The present invention relates to a conveyance device and a heating device.

### Background Art

PTL 1 discloses a configuration in which a tubular body that includes a spiral groove formed on an inner peripheral surface thereof is in close contact with and fixed to an outer peripheral surface of a barrel that extrudes a heated and melted resin with a spiral screw.

### Citation List

### Patent Literature

[PTL 1] Japanese Unexamined Patent Publication No. H07-195494

### Summary of Invention

### Technical Problem

In a case where a molding product is to be manufactured, a heated resin may be extruded and then supplied into a mold to manufacture the molding product.

Here, in a case where the temperature of the resin is higher than necessary, there is a concern that a deterioration in the quality of the resin or the like may be caused. In a case where the temperature of the resin is high, it is preferable to lower the temperature of the resin by causing a medium for cooling to flow. However, in a case where the efficiency of this cooling is low, it takes time to lower the temperature of the resin.

An object of the present invention is to more efficiently lower the temperature of a resin by supplying a cooling medium.

### Solution to Problem

A conveyance device to which the present invention is applied is a conveyance device including a conveyance unit that conveys a resin, a tubular member through which the resin conveyed by the conveyance unit passes, a heating source that is disposed at a position facing an outer peripheral surface of the tubular member and is used to heat an inside of the tubular member, and flow channels of which at least a part is disposed on a side closer to the outer peripheral surface than the heating source in a radial direction of the tubular member and through which a medium for cooling the tubular member passes. The plurality of flow channels are disposed along a circumferential direction of the tubular member.

Here, the conveyance device may further include a fixing member that is disposed at the position facing the outer peripheral surface of the tubular member, is fixed to the tubular member, supports the heating source, and is provided with the plurality of flow channels. The fixing member may be provided with an inlet portion for the medium directed to the plurality of flow channels, and the inlet portion, which is common, may be provided for the plurality of flow channels.

Further, the fixing member may be provided with an outlet portion for the medium having passed through the plurality of flow channels, and the medium having passed through the plurality of flow channels may be discharged from the outlet portion that is common.

Furthermore, the conveyance device may further include a fixing member that is disposed at the position facing the outer peripheral surface of the tubular member, is fixed to the tubular member, supports the heating source, and is provided with the plurality of flow channels. The fixing member may be provided with an inlet portion for the medium directed to the plurality of flow channels. The fixing member may be formed of a plurality of constituent members of which positions in the circumferential direction of the tubular member are different from each other, and the inlet portion may be formed of a gap present between one constituent member and another constituent member adjacent to each other in the circumferential direction.

In addition, the conveyance device may further include a fixing member that is disposed at the position facing the outer peripheral surface of the tubular member, is fixed to the tubular member, supports the heating source, and is provided with the plurality of flow channels. The fixing member may be provided with an outlet portion for the medium having passed through the plurality of flow channels. The fixing member may be formed of a plurality of constituent members of which positions in the circumferential direction of the tubular member are different from each other, and the outlet portion may be formed of a gap present between one constituent member and another constituent member adjacent to each other in the circumferential direction.

Further, the conveyance device may further include a fixing member that is disposed at the position facing the outer peripheral surface of the tubular member, is fixed to the tubular member, supports the heating source, and is provided with the plurality of flow channels. The fixing member may be provided with an inlet portion for the medium directed to the plurality of flow channels and an outlet portion for the medium having passed through the plurality of flow channels, and the outlet portion may be provided on a side opposite to a side where the inlet portion is installed with an axial center of the tubular member interposed therebetween.

Furthermore, in a case where an imaginary plane extending along the axial center of the tubular member and passing through both the inlet portion and the outlet portion is assumed, the plurality of flow channels may be provided in each of two regions facing each other with the imaginary plane interposed therebetween.

In addition, the plurality of flow channels may be provided to extend along the circumferential direction of the tubular member and to be substantially parallel to each other at positions different from each other in an axial direction of the tubular member.

Further, the conveyance device may further include a fixing member that is disposed at the position facing the outer peripheral surface of the tubular member, is fixed to the tubular member, supports the heating source, and is provided with the plurality of flow channels. A plurality of grooves may be provided at a portion of the fixing member facing the outer peripheral surface, and the plurality of flow channels may be formed of the plurality of grooves.

Furthermore, the conveyance device may further include a fixing member that is disposed at the position facing the outer peripheral surface of the tubular member, is fixed to the tubular member, is provided with the plurality of flow channels, includes the heating source therein, and includes a facing surface facing the outer peripheral surface and an opposite surface positioned on a side opposite to the facing surface, and a supply unit that supplies the medium to the plurality of flow channels. A part of the medium directed to the plurality of flow channels by the supply unit may be supplied to the opposite surface of the fixing member.

In addition, in a case where the present invention is regarded as a heating device, a heating device to which the present invention is applied is a heating device that heats a resin passing through a tubular member. The heating device includes a heating source that is disposed at a position facing an outer peripheral surface of the tubular member and is used to heat an inside of the tubular member, and flow channels of which at least a part is disposed on a side closer to the outer peripheral surface than the heating source in a radial direction of the tubular member and through which a medium for cooling the tubular member passes. The plurality of flow channels are disposed along a circumferential direction of the tubular member.

### Advantageous Effects of Invention

According to the present invention, it is possible to more efficiently lower the temperature of a resin by supplying a cooling medium.

### Brief Description of Drawings

Fig. 1 is a diagram showing an example of an extrusion molding machine.
Fig. 2 is a perspective view of a heating device as viewed obliquely from above.
Fig. 3 is a diagram showing an example of an aspect in which a first constituent member and a second constituent member are fixed to each other.
Fig. 4 is a cross-sectional view of the heating device taken along line IV-IV of Fig. 2.
Fig. 5 is a diagram of the second constituent member as viewed in a direction indicated by an arrow V of Fig. 2.
Figs. 6A and 6B are diagrams showing an inlet portion and an outlet portion.
Figs. 7A and 7B are sectional views of the second constituent member.
Figs. 8A and 8B are diagrams showing a comparative example of the heating device.
Fig. 9 is a sectional view of the second constituent member taken along line IX-IX of Fig. 5.
Fig. 10 is a cross-sectional view of a conveyance device taken along line X-X of Fig. 1.
Fig. 11 is a diagram showing another configuration example of the conveyance device.
Fig. 12 is a diagram showing another configuration example of the second constituent member.

### Description of Embodiments

Hereinafter, an embodiment of the present invention will be described with reference to the accompanying drawings.

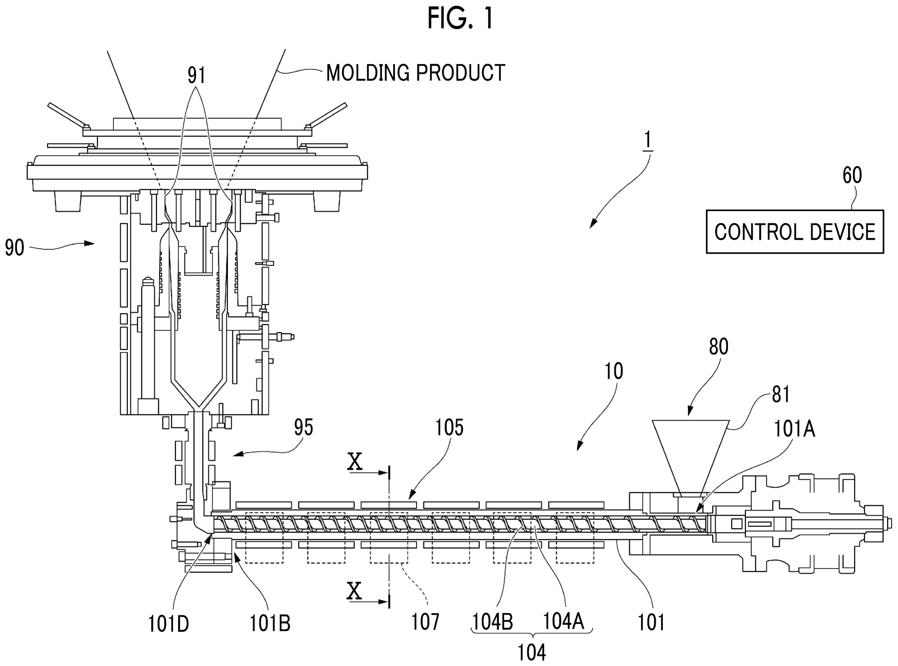

Fig. 1 is a diagram showing an example of an extrusion molding machine 1 according to the present embodiment.

The extrusion molding machine 1 is provided with a conveyance device 10 that conveys a resin. The conveyance device 10 has a function of heating a resin, which is a material to be molded, and then extruding the resin. Further, the extrusion molding machine 1 is provided with a supply device 80 that supplies the resin to the conveyance device 10.

Furthermore, the extrusion molding machine 1 is provided with a mold 90 to which the resin extruded by the conveyance device 10 is supplied, and a connecting part 95 that connects the mold 90 and the conveyance device 10.

In addition, the extrusion molding machine 1 is provided with a control device 60 that controls each part provided in the extrusion molding machine 1.

The conveyance device 10 is provided with a tubular member 101 through which the resin to be conveyed passes.

The tubular member 101 is formed in a cylindrical shape. The tubular member 101 is provided with a resin inlet portion 101A that is an inlet for the resin supplied by the supply device 80. Here, the resin has a pellet shape (granular shape), and the pellet-shaped resin is supplied into the tubular member 101 through the resin inlet portion 101A in the present embodiment.

The supply device 80 is provided with a resin accommodation part 81 that accommodates the resin, and the resin is supplied from the resin accommodation part 81 to the tubular member 101 provided below in the present embodiment.

Further, a discharge portion 101D is provided at an end portion 101B of the tubular member 101, and the resin having passed through the inside of the tubular member 101 is discharged from the discharge portion 101D. In the present embodiment, molten resin is discharged from the discharge portion 101D.

The discharge portion 101D is provided on the downstream side of the resin inlet portion 101A in a movement direction of the resin moving inside the tubular member 101.

A conveyance member 104 that conveys a resin and finally extrudes the resin from the tubular member 101 is provided inside the tubular member 101.

The conveyance member 104 as an example of a conveyance unit is formed of a screw-shaped member. The conveyance member 104 includes a rotary shaft 104A that is disposed along an axial direction of the tubular member 101, and a helical protrusion portion 104B that is provided around the rotary shaft 104A.

The helical protrusion portion 104B is provided from one end portion of the rotary shaft 104A to the other end portion thereof in a longitudinal direction.

The conveyance member 104 is rotated by a force from a motor (not shown), and conveys the resin along the axial direction of the tubular member 101.

More specifically, the rotary shaft 104A of the conveyance member 104 is rotated by a force from the motor, so that the protrusion portion 104B presses the resin in the axial direction of the rotary shaft 104A toward a side where the discharge portion 101D is provided. After reaching the discharge portion 101D, the resin is extruded to the outside of the tubular member 101 through the discharge portion 101D.

A form in which the resin is conveyed by the conveyance unit is not limited to a form in which the conveyance unit provided with the helical protrusion portion 104B is used, and may be a form in which the resin is conveyed by another publicly known method.

The resin extruded from the discharge portion 101D is supplied to the mold 90 through the connecting part 95.

The mold 90 is provided with an annular passage 91 through which the resin passes. In the present embodiment, the molten resin passes through the annular passage 91, so that inflation molding is performed and a tubular film is molded as an example of a molding product.

Here, a mold through which the resin passes has been described as an example of the mold, but the mold is not limited thereto. The resin may be supplied to a mold, which is formed of a movable-side mold and a stationary-side mold and is to be filled with the resin, using the conveyance device 10 of the present embodiment.

The extrusion molding machine 1 for the inflation molding is described as an example in the present embodiment. However, the configuration of the present embodiment can be applied to all devices that require heating and cooling in a device for conveying a resin, such as an injection molding machine or an extrusion molding machine other than an inflation molding machine.

The conveyance device 10 is further provided with heating devices 105 that heat the resin passing through the inside of the tubular member 101. In the present embodiment, in a case where processing in the extrusion molding machine 1 is started, the supply of power to the heating devices 105 is started and the temperature of the tubular member 101 rises.

In the present embodiment, the supply of power is controlled by the control device 60 and power is supplied to the heating devices 105.

The heating device 105 is formed in an annular shape and is provided around the tubular member 101. Further, the plurality of heating devices 105 are provided and are arranged such that the positions of the heating devices 105 in the axial direction of the tubular member 101 are different from each other.

Furthermore, in the present embodiment, blowers 107 that send out air, which is an example of a cooling medium as a medium for cooling the tubular member 101, are provided on a front side of the tubular member 101 in Fig. 1.

The blowers 107 are provided to correspond to the heating devices 105, respectively, and the plurality of blowers 107 are installed.

The air sent out by the blowers 107 is supplied to a plurality of flow channels (to be described later) provided in the heating devices 105. The blowers 107 are a supply unit that supplies air to a plurality of flow channels provided in the heating devices 105, and the flow of air toward the plurality of flow channels is generated by the blowers 107, so that air is supplied to the plurality of flow channels.

In the present embodiment, the blowers 107 as an example of the supply unit are provided on the upstream side of the plurality of flow channels. However, the present invention is not limited thereto, and a suction device that suctions air may be provided on the downstream side of the plurality of flow channels. In this case, the flow of air toward the plurality of flow channels is generated by the suction device as another example of the supply unit, so that air is supplied to the plurality of flow channels.

In the present embodiment, in a case where the temperature of the tubular member 101 exceeds a predetermined temperature, the supply of power to the heating devices 105 is stopped and the supply of air by the blowers 107 is started. Accordingly, the temperature of the tubular member 101 is lowered.

In a case where air is supplied by the blowers 107, the supply of power to the heating devices 105 may not be stopped and the supply of power to the heating devices 105 may be continued. In addition, in a case where air is supplied by the blowers 107, the supply of power to the heating devices 105 may not be stopped and power to be supplied to the heating devices 105 may be reduced.

In the present embodiment, in a case where processing in the extrusion molding machine 1 is continued, the temperature of the tubular member 101 gradually rises.

Specifically, in the present embodiment, the temperature of the resin or the conveyance member 104 rises due to a shear force applied to the resin by the conveyance member 104 formed of a screw. Accordingly, the temperature of the tubular member 101 gradually rises.

In the present embodiment, in a case where the temperature of the tubular member 101 rises and exceeds a predetermined temperature, blowing to be performed by the blowers 107 is started. Accordingly, the temperature of the tubular member 101 is lowered.

More specifically, in the present embodiment, a temperature sensor (not shown) for detecting the temperature of the tubular member 101 is provided, and blowing to be performed by the blowers 107 is started in a case where a temperature detected by the temperature sensor exceeds a predetermined temperature.

Accordingly, air as an example of a cooling medium is supplied to flow channels (to be described later) provided in the heating devices 105, so that the temperature of the tubular member 101 is lowered. Therefore, the temperature of the resin in the tubular member 101 is also lowered.

In the present embodiment, the supply of power to the heating devices 105 or the outputs of the blowers 107 is controlled such that the temperature of the resin falls within a predetermined temperature range.

A case where air is used as the cooling medium will be described as an example in the present embodiment, but the cooling medium is not limited to air.

The cooling medium is not particularly limited, and may be any of gas and liquid.

Examples of the gas include air, but the gas is not limited to air. Gas including components other than air may be used. Further, examples of the liquid include water, but liquid including components other than water, such as oil, may be used as the cooling medium.

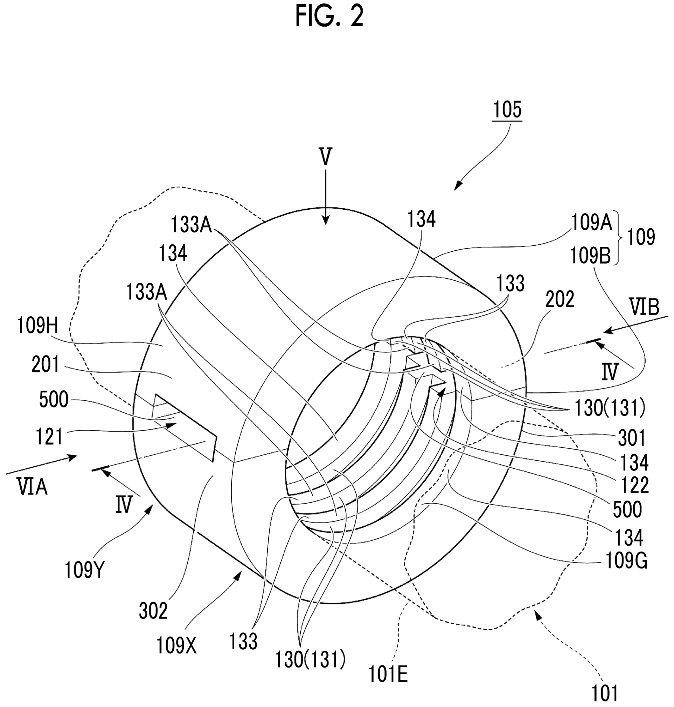

Fig. 2 is a perspective view of the heating device 105 as viewed obliquely from above. A heating source (to be described later) is not shown in Fig. 2.

The heating device 105 is provided with an annular fixing member 109 that is fixed to the tubular member 101. The fixing member 109 is disposed around the tubular member 101 and is disposed at a position facing an outer peripheral surface 101E of the tubular member 101.

The fixing member 109 is formed of a plurality of constituent members.

Specifically, the fixing member 109 is formed of a first constituent member 109A as an example of one constituent member and a second constituent member 109B as an example of another constituent member.

The first constituent member 109A and the second constituent member 109B are provided adjacent to each other in a circumferential direction of the tubular member 101.

In the present embodiment, the position of the first constituent member 109A in the circumferential direction of the tubular member 101 and the position of the second constituent member 109B in the circumferential direction of the tubular member 101 are different from each other.

Each of the first constituent member 109A and the second constituent member 109B is formed in a semicircular shape.

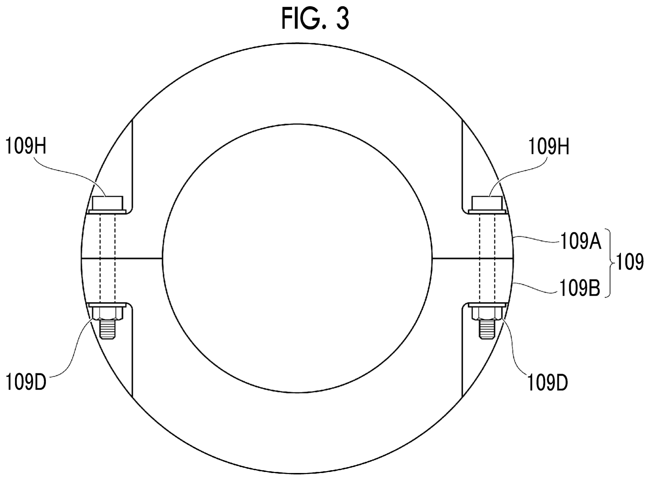

Fig. 3 is a diagram showing an example of an aspect in which the first constituent member 109A and the second constituent member 109B are fixed to each other.

The first constituent member 109A and the second constituent member 109B are fixed to each other using, for example, fastening members as shown in Fig. 3.

In the example shown in Fig. 3, nuts 109D are fixed to bolts 109H passing through through-holes (not shown) provided in the first constituent member 109A and the second constituent member 109B, so that the first constituent member 109A and the second constituent member 109B are fixed to each other.

In the present embodiment, the fixing member 109 is formed of two constituent members. However, the present invention is not limited thereto, and the fixing member 109 may be formed of three or more constituent members. Further, the fixing member 109 may be formed of one member having an annular shape.

Furthermore, fixing between the constituent members is also not limited to fixing using the bolts and the nuts, and the constituent members may be fixed to each other using other publicly known fixing methods.

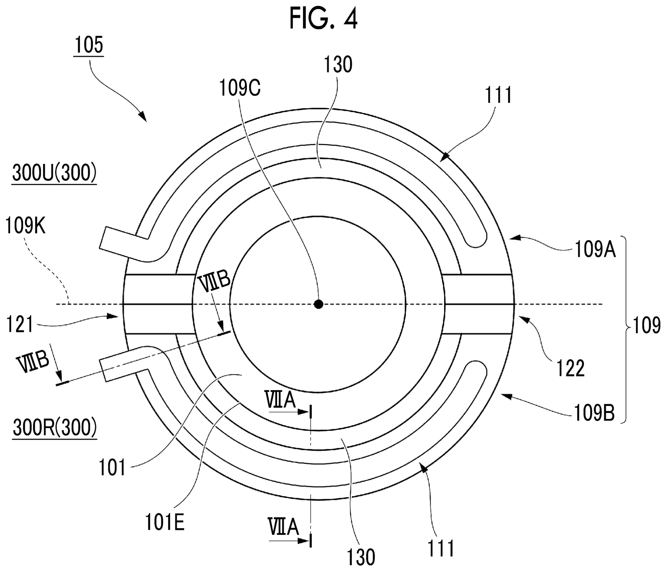

Fig. 4 is a cross-sectional view of the heating device 105 taken along line IV-IV of Fig. 2.

The heating device 105 is provided with heating sources 111.

In the present embodiment, each of the first constituent member 109A and the second constituent member 109B is provided with the heating source 111. Accordingly, one fixing member 109 is provided with a plurality (two in the present embodiment) of the heating sources 111.

The heating sources 111 are supported by the first constituent member 109A and the second constituent member 109B forming the fixing member 109.

The heating source 111 is formed of, for example, an electric heating wire that generates heat in a case where current flows through the electric heating wire. The type of the heating source 111 is not particularly limited, and a heating source 111 that generates heat in another method may be used as the heating source 111.

The heating source 111 of each of the first constituent member 109A and the second constituent member 109B is disposed at a position facing the outer peripheral surface 101E of the tubular member 101.

Further, the heating source 111 of the first constituent member 109A is provided inside the first constituent member 109A, and the heating source 111 of the second constituent member 109B is provided inside the second constituent member 109B.

In manufacturing the first constituent member 109A and the second constituent member 109B, for example, the heating sources 111 are disposed in advance in a mold and then molten metal as a material of the first constituent member 109A and the second constituent member 109B is poured into the mold. In a case where the molten metal is hardened, the first constituent member 109A and the second constituent member 109B inside which the heating sources 111 are disposed are completed.

The first constituent member 109A and the second constituent member 109B of the present embodiment are parts made of a metal material, and are parts excellent in thermal conductivity.

In the present embodiment, the heating source 111 is disposed at the position facing the outer peripheral surface 101E of the tubular member 101.

Here, a configuration in which "the heating source 111 is disposed at the position facing the outer peripheral surface 101E of the tubular member 101" is not limited to a configuration in which the heating source 111 is directly disposed at a position facing the tubular member 101.

An aspect in which "the heating source 111 is disposed at the position facing the outer peripheral surface 101E of the tubular member 101" includes not only an aspect in which no other member is present between the heating source 111 and the outer peripheral surface 101E of the tubular member 101, but also an aspect in which another member is disposed between the heating source 111 and the outer peripheral surface 101E of the tubular member 101.

The aspect in which "the heating source 111 is disposed at the position facing the outer peripheral surface 101E of the tubular member 101" includes an aspect in which the heating source 111 faces the tubular member 101 via a part excellent in thermal conductivity, such as the first constituent member 109A or the second constituent member 109B of the present embodiment.

More preferably, the heating source 111 may be embedded in a part excellent in thermal conductivity, such as the first constituent member 109A or the second constituent member 109B, and the part excellent in thermal conductivity and the heating source 111 may be in direct contact with each other.

Further, it is further preferable to adopt an aspect in which the part excellent in thermal conductivity, such as the first constituent member 109A or the second constituent member 109B, and the tubular member 101 are in direct contact with each other.

As shown in Fig. 2, the fixing member 109 includes a facing surface 109G that faces the outer peripheral surface 101E of the tubular member 101 and an opposite surface 109H that is positioned on a side opposite to the facing surface 109G.

Further, in the present embodiment, a plurality of flow channels 130 through which a cooling medium passes are provided on the facing surface 109G of the fixing member 109. In the present embodiment, the plurality of flow channels 130 are provided on each of the first constituent member 109A and the second constituent member 109B.

In the present embodiment, a plurality of grooves 131 are provided on the facing surface 109G of the fixing member 109 that is positioned at a portion facing the outer peripheral surface 101E of the tubular member 101, and the plurality of flow channels 130 are formed of the plurality of grooves 131.

In the present embodiment, the grooves 131 are provided in the fixing member 109, so that a protrusion portion 133 protruding toward the outer peripheral surface 101E of the tubular member 101 is provided between the grooves 131 adjacent to each other on each of the first constituent member 109A and the second constituent member 109B.

Each of the first constituent member 109A and the second constituent member 109B is provided with a plurality (two in the present embodiment) of protrusion portions 133.

Further, the plurality of protrusion portions 133 of each of the first constituent member 109A and the second constituent member 109B are provided substantially parallel to each other, and are disposed along the circumferential direction of the tubular member 101.

In the present embodiment, tip portions 133A of the protrusion portions 133 in a protruding direction are in contact with the outer peripheral surface 101E of the tubular member 101.

On each of the first constituent member 109A and the second constituent member 109B, contact portions 134 that extend along the circumferential direction of the fixing member 109 and are in contact with the outer peripheral surface 101E of the tubular member 101 are provided at portions where one end portion 109X and the other end portion 109Y of the fixing member 109 in the axial direction are positioned.

The tip portion 133A of each protrusion portion 133 and the contact portion 134 are formed of a part of the facing surface 109G of the fixing member 109.

In the present embodiment, heat generated from the heating sources 111 is transmitted to the tubular member 101 through the protrusion portions 133 and the contact portions 134.

The flow channels 130 provided on each of the first constituent member 109A and the second constituent member 109B are provided to extend along the circumferential direction of the tubular member 101 and to be parallel to each other, as described above.

As shown in Fig. 4, the flow channels 130 are provided closer to the outer peripheral surface 101E of the tubular member 101 than the heating sources 111 in a radial direction of the tubular member 101.

Further, the flow channels 130 are disposed along the circumferential direction of the tubular member 101 as described above.

In the present embodiment, a cooling medium for cooling the tubular member 101 passes through the flow channels 130. Accordingly, the tubular member 101 is cooled, so that the temperature of the resin in the tubular member 101 is lowered.

Further, as shown in Fig. 2, the fixing member 109 is provided with an inlet portion 121 for a cooling medium that is directed to the plurality of flow channels 130. Furthermore, the fixing member 109 is provided with an outlet portion 122 for the cooling medium that has passed through the plurality of flow channels 130.

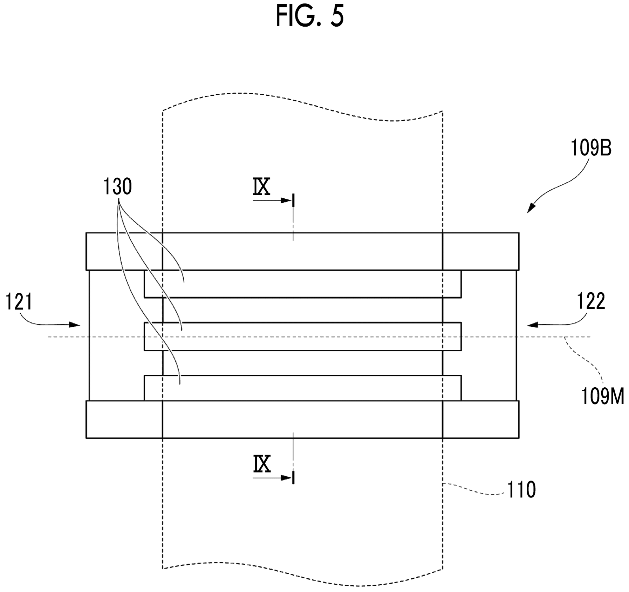

Fig. 5 is a diagram of the second constituent member 109B as viewed in a direction indicated by an arrow V of Fig. 2. Here, the second constituent member 109B will be described. However, the first constituent member 109A also has the same configuration as the second constituent member 109B.

In the present embodiment, the common inlet portion 121 is provided for the plurality of flow channels 130 as shown in Fig. 5. The present invention is not limited to a configuration in which the common inlet portion 121 is provided as described above, and inlet portions 121 may be individually provided to correspond to the flow channels 130, respectively.

Further, in the present embodiment, an outlet portion 122 is also shared and the cooling medium having passed through the plurality of flow channels 130 is discharged from the common outlet portion 122. As in the case of the inlet portion 121, outlet portions 122 may be individually provided to correspond to the flow channels 130, respectively.

One flow channel is provided up to the inlet portion 121 as the flow channel for the cooling medium sent out by the blower 107 (see Fig. 1).

In the present embodiment, the inlet portion 121 serves as a branch portion of the flow channel, and the flow channel branches at the branch portion. A plurality of flow channels 130 are provided on the downstream side of the branch portion, and the cooling medium moves to the downstream side through the plurality of flow channels 130.

After that, the flow channels merge at the outlet portion 122, and one flow channel is provided at the outlet portion 122 again. Then, the cooling medium having passed through this one flow channel is discharged to the outside of the fixing member 109.

In the present embodiment, as described above, one flow channel is provided on the upstream side of the fixing member 109 in the movement direction of the cooling medium, and flow channels of which the number is smaller than the number of flow channels 130 installed inside the fixing member 109 are provided on the upstream side of the fixing member 109.

In the present embodiment, the cooling medium is supplied to the fixing member 109 using this small number of flow channels.

In contrast, flow channels 130 of which the number is larger than this small number of flow channels are provided inside the fixing member 109, and the cooling medium is supplied to the large number of flow channels 130 at a portion where the heating device 105 is installed to cool the tubular member 101.

Further, in the present embodiment, the inlet portion 121 is formed of a gap 500 present between the first constituent member 109A and the second constituent member 109B as shown in Fig. 2.

Similarly, in the present embodiment, the outlet portion 122 is also formed of the gap 500 present between the first constituent member 109A and the second constituent member 109B.

The first constituent member 109A and the second constituent member 109B are adjacent to each other in the circumferential direction of the tubular member 101.

In the present embodiment, the supply of the cooling medium to the fixing member 109 and the discharge of the cooling medium from the fixing member 109 are performed through the gap 500 between the first constituent member 109A and the second constituent member 109B adjacent to each other.

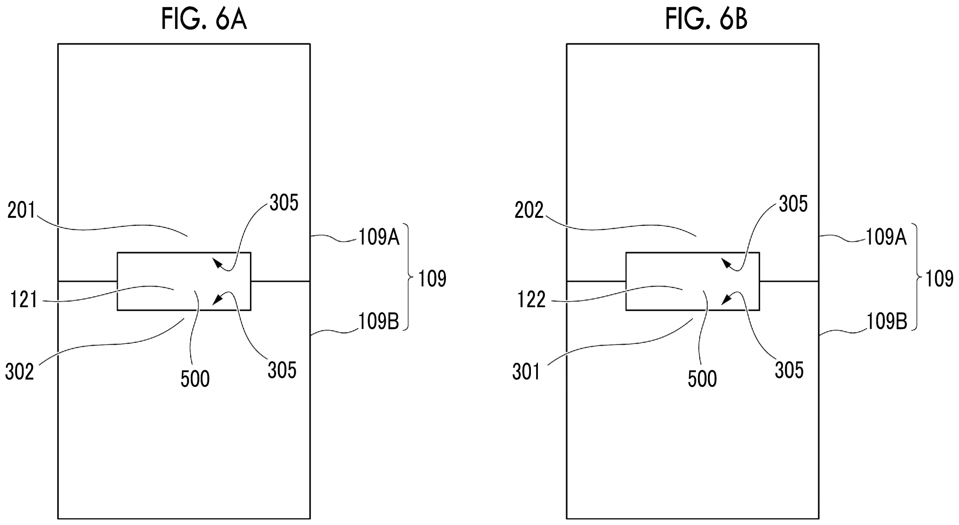

Figs. 6A and 6B are diagrams showing the inlet portion 121 and the outlet portion 122.

Specifically, Fig. 6A is a diagram of the inlet portion 121 as viewed in a direction indicated by an arrow VIA of Fig. 2, and Fig. 6B is a diagram of the outlet portion 122 as viewed in a direction indicated by an arrow VIB of Fig. 2.

As shown in Fig. 2, the first constituent member 109A includes one end portion 201 and the other end portion 202 of which positions in the circumferential direction of the tubular member 101 are different from each other, and the second constituent member 109B also includes one end portion 301 and the other end portion 302 of which positions in the circumferential direction of the tubular member 101 are different from each other.

As shown in Fig. 6A, a cutout 305 is formed at each of one end portion 201 of the first constituent member 109A and the other end portion 302 of the second constituent member 109B. In the present embodiment, the cutouts 305 form the gap 500 and the gap 500 forms the inlet portion 121.

Further, as shown in Fig. 6B, a cutout 305 is also formed at each of the other end portion 202 of the first constituent member 109A and one end portion 301 of the second constituent member 109B. In the present embodiment, the cutouts 305 form the gap 500 and the gap 500 forms the outlet portion 122.

In the present embodiment, the cutouts 305 are provided at both one end portion 201 of the first constituent member 109A and the other end portion 302 of the second constituent member 109B. However, the cutout 305 may be provided at only one of one end portion 201 of the first constituent member 109A and the other end portion 302 of the second constituent member 109B.

Similarly, the cutout 305 may be provided at only one of the other end portion 202 of the first constituent member 109A and one end portion 301 of the second constituent member 109B.

In the present embodiment, as shown in Fig. 4, the outlet portion 122 is provided on a side opposite to a side where the inlet portion 121 is installed with an axial center 109C of the tubular member 101 interposed therebetween.

In the present embodiment, in a case where an imaginary plane 109K extending along the axial center 109C of the tubular member 101 and passing through the inlet portion 121 is assumed, the outlet portion 122 is positioned in the imaginary plane 109K.

In other words, in the present embodiment, both the inlet portion 121 and the outlet portion 122 are positioned in the imaginary plane 109K extending along the axial center 109C of the tubular member 101.

Further, in the present embodiment, in a case where a plane 109M perpendicular to the axial direction of the tubular member 101 is assumed as shown in Fig. 5, both the inlet portion 121 and the outlet portion 122 are positioned in one common plane 109M.

Furthermore, in the present embodiment, the plurality of flow channels 130 are provided in each of two regions 300, that is, a first region 300U and a second region 300R facing each other with the imaginary plane 109K shown in Fig. 4 interposed therebetween.

In other words, in the present embodiment, in a case where the imaginary plane 109K is assumed, the plurality of flow channels 130 are provided in each of two regions 300, that is, the first region 300U and the second region 300R facing each other with the imaginary plane 109K interposed therebetween.

In the present embodiment, the plurality of flow channels 130 are provided on each of the first constituent member 109A positioned in the first region 300U that is one region and the second constituent member 109B positioned in the second region 300R that is the other region. As a result, the plurality of flow channels 130 are provided in each of the two regions 300.

Accordingly, in the present embodiment, the cooling medium has entered from the inlet portion 121 passes through the two respective regions 300 and moves toward the outlet portion 122. Therefore, the efficiency of cooling the tubular member 101 is improved as compared to a configuration in which the cooling medium passes through only one region 300.

A configuration in which the outlet portion 122 is provided on the side opposite to the side where the inlet portion 121 is installed has been described as an example in the present embodiment. However, an aspect in which the inlet portion 121 and the outlet portion 122 are disposed is not limited thereto.

For example, in a case where an imaginary plane (not shown) extending along the axial center 109C of the tubular member 101 is assumed, both the inlet portion 121 and the outlet portion 122 may be provided in one region of two regions facing each other with the imaginary plane interposed therebetween.

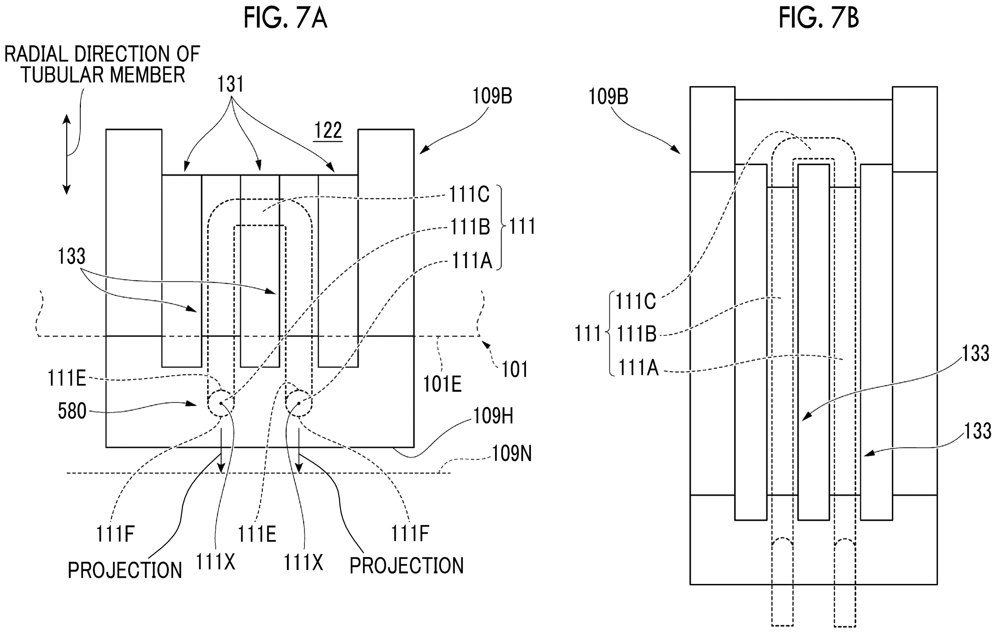

Figs. 7A and 7B are sectional views of the second constituent member 109B.

Fig. 7A is a sectional view of the second constituent member 109B taken along line VIIA-VIIA of Fig. 4. Further, Fig. 7B is a sectional view of the second constituent member 109B taken along line VIIB-VIIB of Fig. 4.

Here, the second constituent member 109B will be described. However, the first constituent member 109A also has the same configuration as the second constituent member 109B.

In the present embodiment, as shown in Fig. 7B, the heating source 111 formed of an electric heating wire includes a first portion 111A and a second portion 111B that extend along the circumferential direction of the tubular member 101 (not shown in Fig. 7B).

Further, the heating source 111 includes a third portion 111C that connects the first portion 111A and the second portion 111B extending along the axial direction of the tubular member 101.

The first portion 111A and the second portion 111B are disposed in a relationship in which the first portion 111A and the second portion 111B are substantially parallel to each other. In the present embodiment, current flows from one portion of the first portion 111A and the second portion 111B to the other portion thereof.

More specifically, current flows from one portion to the other portion via the third portion 111C. Accordingly, the heating source 111 generates heat.

In the present embodiment, as indicated by reference numeral 580 in Fig. 7A, the first portion 111A and the second portion 111B of the heating source 111 are provided between the protrusion portions 133 and the opposite surface 109H.

In other words, in the present embodiment, in a case where the two protrusion portions 133 and the first portion 111A and the second portion 111B of the heating source 111 are projected onto an imaginary plane 109N extending along the axial direction of the tubular member 101, one protrusion portion 133 thereof and the first portion 111A overlap with each other and the other protrusion portion 133 thereof and the second portion 111B overlap with each other.

Further, a configuration in which the first portion 111A and the second portion 111B are disposed along the protrusion portions 133 as shown in Figs. 7A and 7B is adopted in the present embodiment.

As shown in Fig. 7B, the first portion 111A is disposed along one protrusion portion 133 of the two protrusion portions 133 and the second portion 111B is disposed along the other protrusion portion 133. In the present embodiment, the first portion 111A and the second portion 111B are substantially parallel to each other.

In the present embodiment, heat is likely to be transferred from the heating source 111 to the tubular member 101 as compared to a case where the first portion 111A and the second portion 111B are disposed between the grooves 131 (see Fig. 7A) and the opposite surface 109H and the first portion 111A and the second portion 111B are disposed along the grooves 131. Accordingly, the efficiency of heating the tubular member 101 is improved.

Here, examples of an aspect in which the first portion 111A and the second portion 111B are substantially parallel to each other include an aspect in which the respective heating sources such as the first portion 111A and the second portion 111B are arranged along the axial direction of the tubular member 101, an aspect in which a plurality of heating sources bent without being twisted are arranged such that adjacent portions of the heating sources face the same direction, and an aspect in which heating sources are bent a plurality of times without being twisted such that adjacent portions of the heating sources face the same direction. An aspect in which one heating source is disposed in a helical shape is not included in this aspect in which the first portion 111A and the second portion 111B are substantially parallel to each other.

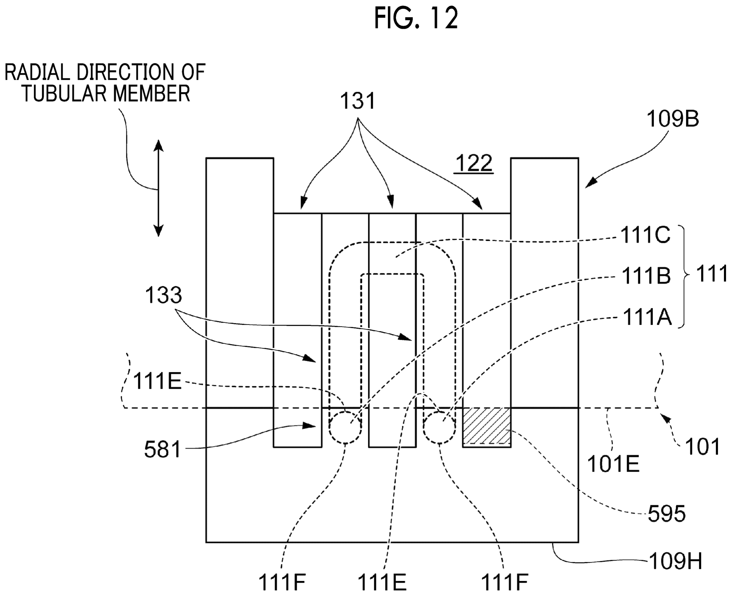

Fig. 12 is a diagram showing another configuration example of the second constituent member 109B. Fig. 12 shows a state of the cross section of the second constituent member 109B taken along line VIIA-VIIA of Fig. 4, as in Fig. 7A. Further, the second constituent member 109B will be described here as in the above description. However, the first constituent member 109A also has the same configuration as the second constituent member 109B.

In the configuration example shown in Fig. 12, as indicated by reference numeral 581, the first portion 111A is embedded in one protrusion portion 133 of two protrusion portions 133 and the second portion 111B is embedded in the other protrusion portion 133.

In this configuration example, the first portion 111A and the second portion 111B are close to the tubular member 101 as compared to the configuration example shown in Figs. 7A and 7B. Accordingly, the efficiency of heating the tubular member 101 is improved.

Although not described above, as shown in Fig. 12, the heating source 111 includes one end portion 111E that is positioned on a side close to the outer peripheral surface 101E of the tubular member 101 and the other end portion 111F that is positioned on a side opposite to the outer peripheral surface 101E.

The heating source 111 includes the first portion 111A and the second portion 111B. However, each of the first portion 111A and the second portion 111B includes one end portion 111E that is positioned on the side close to the outer peripheral surface 101E of the tubular member 101 and the other end portion 111F that is positioned on the side opposite to the outer peripheral surface 101E, as indicated by reference numeral 581.

In the configuration example shown in Fig. 12, a portion, which is a part of the groove 131 forming the flow channel and is denoted by reference numeral 595, is disposed on a side closer to the outer peripheral surface 101E of the tubular member 101 than the first portion 111A and the second portion 111B of the heating source 111.

In the present embodiment, the hatched portion denoted by reference numeral 595 is a part of the groove 131 that is disposed on the side closer to the outer peripheral surface 101E of the tubular member 101 than the first portion 111A and the second portion 111B.

Here, in the configuration example shown in Figs. 7A and 7B, as indicated by reference numeral 580 in Fig. 7A, all the portions of the groove 131 are positioned on a side closer to the outer peripheral surface 101E of the tubular member 101 than the other end portion 111F of the heating source 111 in the radial direction of the tubular member 101. Further, in the configuration example shown in Figs. 7A and 7B, all the portions of the groove 131 are positioned on the side closer to the outer peripheral surface 101E of the tubular member 101 than one end portion 111E of the heating source 111. Furthermore, in the configuration example shown in Figs. 7A and 7B, all the portions of the groove 131 are positioned on the side closer to the outer peripheral surface 101E of the tubular member 101 than a central portion 111X of the first portion 111A and a central portion 111X of the second portion 111B of the heating source 111.

The arrangement of the grooves 131 and the heating source 111 is not limited to the aspect shown in Figs. 7A and 7B, and at least a part of the grooves 131 may be positioned on the side closer to the outer peripheral surface 101E of the tubular member 101 than the heating source 111 as shown in Fig. 12. In the configuration example shown in Fig. 12, not all the portions of the groove 131 but a part of the groove 131 is positioned on a side closer to the outer peripheral surface 101E of the tubular member 101 than the heating source 111.

In a case where the groove 131 is formed on a side closer to the outer peripheral surface 101E of the tubular member 101 than the central portion 111X as shown in Fig. 7A in forming the groove 131, an influence of the heating source 111 on cooling is reduced. Accordingly, cooling using the groove 131 functions more effectively.

Further, from the viewpoint of reducing the influence of the heating source 111 on cooling, the groove 131 may be formed on a side closer to the outer peripheral surface 101E of the tubular member 101 than one end portion 111E. In this case, cooling using the groove 131 functions more effectively.

Furthermore, in a case where the entire groove 131 functioning as the flow channel is disposed on a side closer to the outer peripheral surface 101E of the tubular member 101 than one end portion 111E, cooling using the groove 131 functions more effectively.

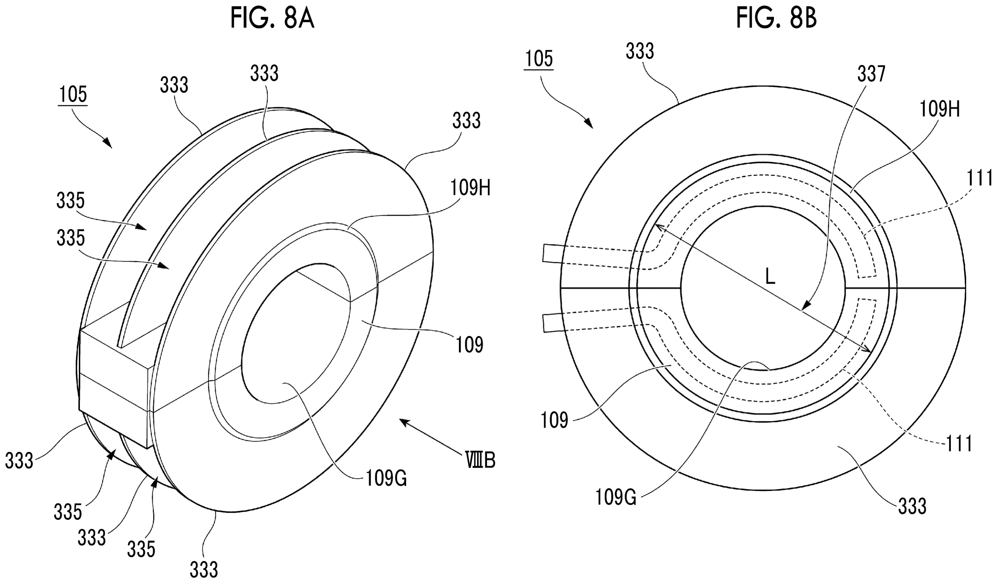

Figs. 8A and 8B are diagrams showing a comparative example of the heating device 105.

Fig. 8A is a perspective view of a heating device 105 of the comparative example, and Fig. 8B is a diagram of the heating device 105 of the comparative example as viewed in a direction indicated by an arrow VIIIB of Fig. 8A. The heating source 111 is not shown in Fig. 8A.

In this comparative example, as shown in Figs. 8A and 8B, a plurality of protrusion portions 333 extending along the circumferential direction of the fixing member 109 are provided on the opposite surface 109H of the fixing member 109.

Further, the grooves 131 described above are not provided on the facing surface 109G of the fixing member 109 in this comparative example.

In this comparative example, the plurality of protrusion portions 333 are provided on an outer side than the heating source 111 in a radial direction of the fixing member 109 as shown in Fig. 8B.

In this comparative example, a cooling medium is supplied to a gap 335 (see Fig. 8A) present between the protrusion portions 333 to cool the tubular member 101 (not shown in Figs. 8A and 8B) via the fixing member 109.

In this comparative example, the outer diameter of the heating device 105 is increased as compared to the configuration of the present embodiment described above. In this case, since the conveyance device 10 (see Fig. 1) is likely to be increased in size, problems, such as a restriction on the disposition of the conveyance device 10, are likely to occur.

In contrast, in the present embodiment, the protrusion portions 133 are provided on an inner side than the heating source 111 in the radial direction of the fixing member 109 as described above. In other words, in the present embodiment, the protrusion portions 133 are provided on a side closer to the tubular member 101 than the heating source 111. In this case, an increase in the size of the heating device 105 is suppressed.

Fig. 8B shows the outer diameter of the heating device 105 of the present embodiment shown in Fig. 2. A dimension L indicated by reference numeral 337 in Fig. 8B indicates the outer diameter of the heating device 105 of the present embodiment.

In a case where a configuration in which the protrusion portions 333 are provided on an outer side than the heating source 111 is adopted, the outer diameter of the heating device 105 is increased as compared to the configuration of the present embodiment as shown in Fig. 8B.

In contrast, in a case where the configuration in which the protrusion portions 133 are provided on an inner side than the heating source 111 is adopted as in the present embodiment, the outer diameter of the heating device 105 is reduced.

Further, in the heating device 105 of the comparative example shown in Figs. 8A and 8B, the efficiency of heating the tubular member 101 is likely to be reduced as compared to the heating device 105 of the present embodiment.

Even in a case where power is supplied to the heating source 111 in the heating device 105 of the comparative example to raise the temperature of the heating device 105 itself, heat generated by the heating source 111 escapes through the protrusion portions 333 and the temperature of the heating device 105 is less likely to rise.

In contrast, in the present embodiment, the protrusion portions 133 and the grooves 131 are provided on the facing surface 109G corresponding to an inner peripheral surface of the fixing member 109 as shown in Fig. 2.

In this case, heat dissipating from the protrusion portions 133 and the grooves 131 is reduced, so that the temperature of the heating device 105 itself is likely to rise. In this case, the efficiency of heating the tubular member 101 is improved.

In the present embodiment, the grooves 131 are formed on the facing surface 109G corresponding to the inner peripheral surface of the fixing member 109. In this case, a contact area between the fixing member 109 and the tubular member 101 is reduced. There is a concern that the efficiency of heating the tubular member 101 may be reduced due to a reduction in the contact area.

However, since the protrusion portions 133 and the grooves 131 are not exposed to the outside as described above in the present embodiment, heat dissipating through the protrusion portions 133 and the grooves 131 is reduced.

As a result, in the present embodiment, the contact area between the fixing member 109 and the tubular member 101 is reduced but the efficiency of heating the tubular member 101 can be improved in the heating device 105 as a whole.

Further, in the heating device 105 of the comparative example shown in Figs. 8A and 8B, efficiency in a case where the tubular member 101 is cooled is reduced as compared to the heating device 105 of the present embodiment.

Even in this comparative example, a cooling medium supplied from the blower 107 is supplied to the heating device 105 to cool the tubular member 101. However, since the tubular member 101 is cooled via the fixing member 109 in this case, the efficiency of cooling the tubular member 101 is reduced.

In contrast, a cooling medium is directly supplied to the tubular member 101 in the present embodiment.

Specifically, in the present embodiment, a cooling medium passing through the flow channels 130 formed in the fixing member 109 (see Fig. 2) is moved while being guided by the outer peripheral surface 101E of the tubular member 101, and the cooling medium is in direct contact with the outer peripheral surface 101E.

In this case, the efficiency of cooling the tubular member 101 is higher than the efficiency of cooling the tubular member 101 in the heating device 105 of the comparative example.

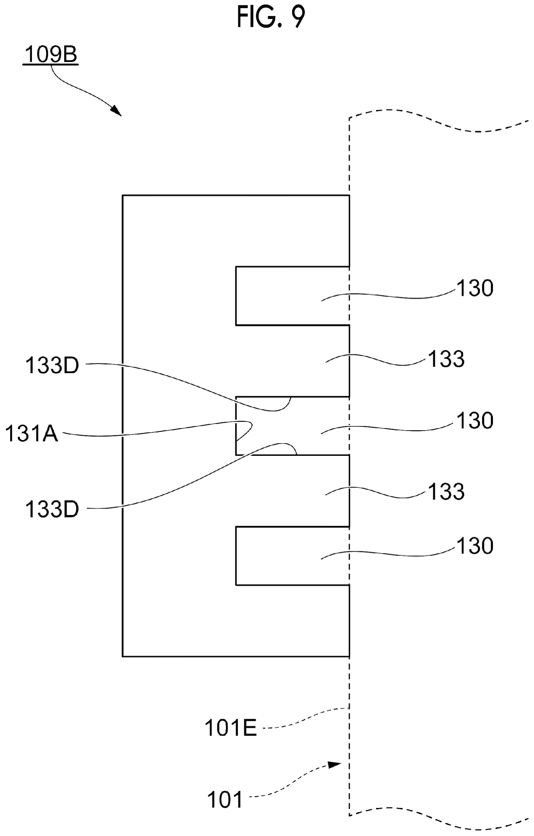

Fig. 9 is a sectional view of the second constituent member 109B taken along line IX-IX of Fig. 5.

In the present embodiment, each flow channel 130 is positioned in a space surrounded by a bottom surface 131A of the groove 131, side surfaces 133D of two adjacent protrusion portions 133 positioned on both sides of the groove 131, and the outer peripheral surface 101E of the tubular member 101.

In this case, the flow channel 130 is formed in a closed space, and a movement speed of the cooling medium passing through the flow channel 130 is increased as compared to a case where a part of the flow channel 130 is open.

In a case where the movement speed of the cooling medium is increased, the efficiency of cooling the tubular member 101 is improved as compared to a case where the movement speed of the cooling medium is not increased.

Here, although not shown, an aspect in which one flow channel is provided in a helical shape around the tubular member 101 is also conceivable as another comparative example.

In this case, the position of the inlet portion of the flow channel in the axial direction of the tubular member 101 and the position of the outlet portion of the flow channel in the axial direction of the tubular member 101 are different from each other.

In contrast, in the present embodiment, the position of the inlet portion 121 of the flow channel 130 in the axial direction of the tubular member 101 and the position of the outlet portion 122 of the flow channel 130 in the axial direction of the tubular member 101 coincide with each other as shown in Fig. 5.

In a configuration in which only one helical flow channel is provided as in the comparative example, the temperature of the cooling medium gradually rises as the cooling medium flows through the flow channel. For this reason, the efficiency of cooling the tubular member 101 is reduced in the latter half portion of the flow channel.

Further, in a configuration in which only one helical flow channel is provided, the flow channel becomes long. For this reason, a pressure loss is likely to occur.

In contrast, the cooling medium supplied from the blower 107 flows through the plurality of flow channels 130 in the present embodiment. Accordingly, since the temperature rise of the cooling medium can be suppressed as compared to a case where a cooling medium flows through only one flow channel, the efficiency of cooling the tubular member 101 can be improved.

Further, in the present embodiment, the length of each of the flow channels 130 is shorter than the length of the circumference of the tubular member 101, and is shorter than that in a case where one helical flow channel is provided. In this case, a pressure loss is reduced.

In addition, as another aspect of the heating device 105, the heating sources 111 may not be installed in the fixing member 109 (see Fig. 2) and each heating source 111 formed of a band heater or the like may be installed at a position facing the opposite surface 109H of the fixing member 109.

In the above-described embodiment, the heating sources 111 are provided inside the fixing member 109, and each heating source 111 is positioned between the facing surface 109G and the opposite surface 109H of the fixing member 109.

An aspect in which the heating sources 111 are disposed is not limited thereto, and each heating source 111 formed of a band heater or the like may be installed at a position facing the opposite surface 109H of the fixing member 109 as described above.

In this case, the heating sources 111 are provided in the outermost layer of the heating device 105.

In the fixing member 109, the flow channels 130 may be provided on a side closer to the tubular member 101 than the heating source 111, and the flow channels 130 may be provided closer to the tubular member 101 than the heating sources 111 after the heating sources 111 are provided in the outermost layer of the heating device 105.

A more preferable aspect is an aspect in which the heating sources 111 are provided inside the fixing member 109 and each heating source 111 is positioned between the facing surface 109G and the opposite surface 109H of the fixing member 109.

In an aspect in which the heating sources 111 are positioned in the outermost layer of the fixing member 109, a distance between the outer peripheral surface 101E of the tubular member 101 and the heating source 111 is increased. For this reason, there is a concern that the efficiency of heating the tubular member 101 may be reduced.

In contrast, in an aspect in which the heating sources 111 are positioned inside the fixing member 109, a distance between the outer peripheral surface 101E of the tubular member 101 and the heating source 111 is reduced. For this reason, the efficiency of heating the tubular member 101 is improved.

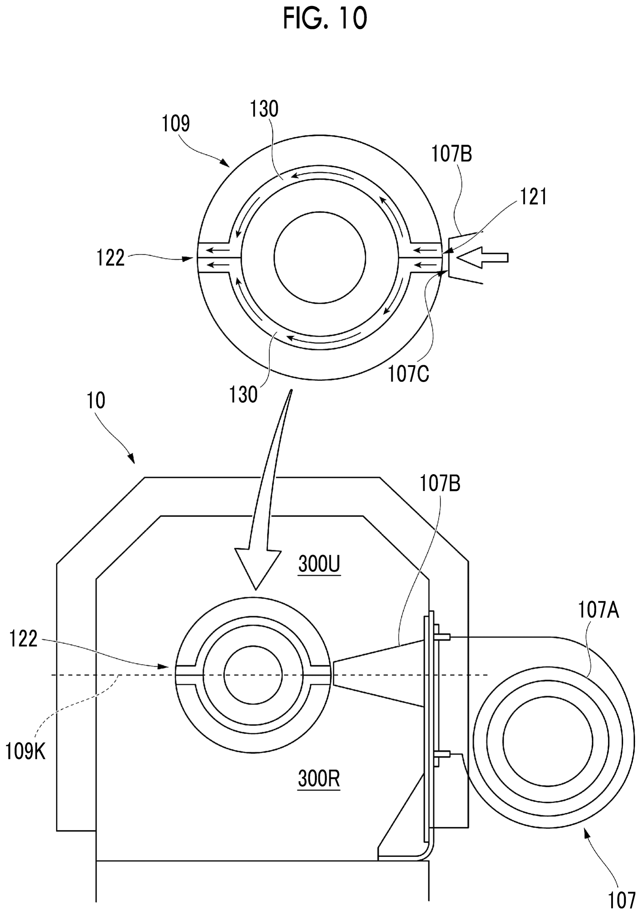

Fig. 10 is a cross-sectional view of the conveyance device 10 taken along line X-X of Fig. 1.

As shown in Fig. 10, the blower 107 is provided with a fan 107A that sends out a cooling medium and a tubular guide member 107B through which the air sent out by the fan 107A passes and which guides the air.

In the present embodiment, an opening 107C positioned at a tip end of the guide member 107B is positioned at a position facing the inlet portion 121, and the cooling medium from the opening 107C is supplied to the flow channels 130 provided inside the fixing member 109 through the inlet portion 121.

In the present embodiment, as described above, the cooling medium flows toward the outlet portion 122 through the first region 300U and the second region 300R facing each other with the plane 109K, which passes through both the inlet portion 121 and the outlet portion 122, interposed therebetween.

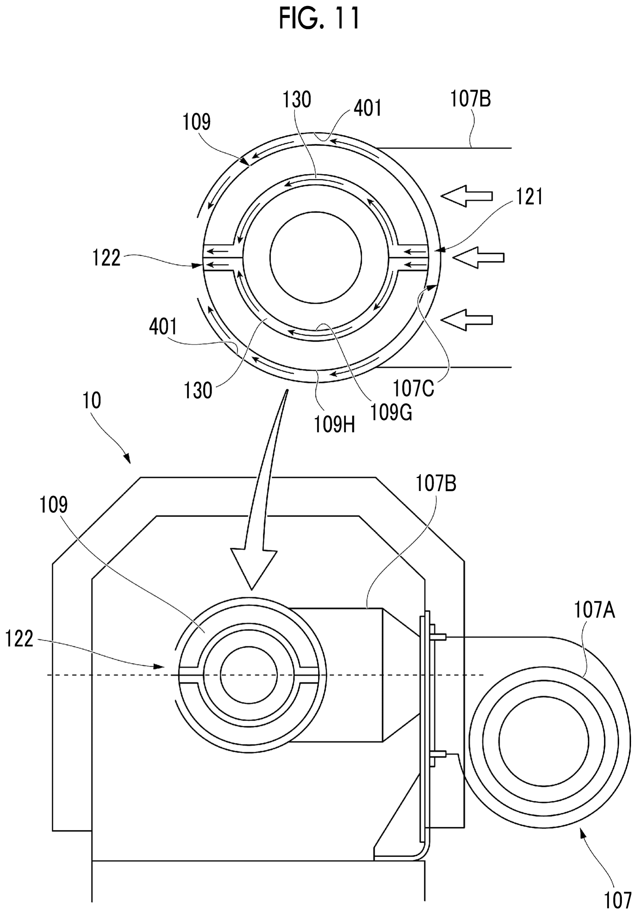

Fig. 11 is a diagram showing another configuration example of the conveyance device 10.

In the configuration example shown in Fig. 11, a part of a cooling medium sent out by the blower 107 is also supplied to the opposite surface 109H of the fixing member 109.

In this configuration example, an opening 107C of a guide member 107B is larger than the opening 107C of the configuration example shown in Fig. 10, and not only the inlet portion 121 but also a portion of the fixing member 109 other than the inlet portion 121 is positioned at a position facing the opening 107C.

Specifically, a part of the opposite surface 109H of the fixing member 109 is also positioned at the position facing the opening 107C. In other words, a part of the outer peripheral surface of the fixing member 109 formed in an annular shape is also positioned at the position facing the opening 107C.

Accordingly, in this configuration example, the cooling medium sent out by the blower 107 is supplied not only to the inlet portion 121 but also to the opposite surface 109H of the fixing member 109. In other words, the cooling medium is also supplied to the outer peripheral surface of the fixing member 109.

Accordingly, not only the facing surface 109G but also the opposite surface 109H of the fixing member 109 is cooled in this configuration example.

A guide part 401 that is disposed along the opposite surface 109H and guides the cooling medium from the opening 107C is provided at a position facing the opposite surface 109H of the fixing member 109.

In this configuration example, the cooling medium is moved to a side where the outlet portion 122 positioned on a side opposite to a side where the inlet portion 121 is provided along the opposite surface 109H of the fixing member 109, by the guide part 401.

In this configuration example shown in Fig. 11, the cooling medium is supplied to the inlet portion 121 and the opposite surface 109H by the blowers 107 as an example of the supply unit disposed on the upstream side of the opposite surface 109H in the movement direction of the cooling medium.

The supply of the cooling medium to the inlet portion 121 and the opposite surface 109H is not limited to an aspect in which the blowers 107 are used, and may be performed by a suction device (not shown) that is disposed on the downstream side of the inlet portion 121 and the opposite surface 109H in the movement direction of the cooling medium. In this case, the cooling medium is supplied to the inlet portion 121 and the opposite surface 109H by the suction device as another example of the supply unit.

### Reference Signs List

10 Conveyance device
101 Tubular member
101E Outer peripheral surface
104 Conveyance member
105 Heating device
107 Blower
109 Fixing member
109A First constituent member
109B Second constituent member
109G Facing surface
109H Opposite surface
109K Plane
111 Heating source
121 Inlet portion
122 Outlet portion
130 Flow channel
131 Groove
300R Second region
300U First region
500 Gap

## Claims

1. A conveyance device comprising:
a conveyance unit that conveys a resin;
a tubular member through which the resin conveyed by the conveyance unit passes;
a heating source that is disposed at a position facing an outer peripheral surface of the tubular member and is used to heat an inside of the tubular member; and
flow channels of which at least a part is disposed on a side closer to the outer peripheral surface than the heating source in a radial direction of the tubular member and through which a medium for cooling the tubular member passes,
wherein the plurality of flow channels are disposed along a circumferential direction of the tubular member.

2. The conveyance device according to claim 1, further comprising:
a fixing member that is disposed at the position facing the outer peripheral surface of the tubular member, is fixed to the tubular member, supports the heating source, and is provided with the plurality of flow channels,
wherein the fixing member is provided with an inlet portion for the medium directed to the plurality of flow channels, and
the inlet portion, which is common, is provided for the plurality of flow channels.

3. The conveyance device according to claim 2,
wherein the fixing member is provided with an outlet portion for the medium having passed through the plurality of flow channels, and
the medium having passed through the plurality of flow channels is discharged from the outlet portion that is common.

4. The conveyance device according to claim 1, further comprising:
a fixing member that is disposed at the position facing the outer peripheral surface of the tubular member, is fixed to the tubular member, supports the heating source, and is provided with the plurality of flow channels,
wherein the fixing member is provided with an inlet portion for the medium directed to the plurality of flow channels,
the fixing member is formed of a plurality of constituent members of which positions in the circumferential direction of the tubular member are different from each other, and
the inlet portion is formed of a gap present between one constituent member and another constituent member adjacent to each other in the circumferential direction.

5. The conveyance device according to claim 1, further comprising:
a fixing member that is disposed at the position facing the outer peripheral surface of the tubular member, is fixed to the tubular member, supports the heating source, and is provided with the plurality of flow channels,
wherein the fixing member is provided with an outlet portion for the medium having passed through the plurality of flow channels,
the fixing member is formed of a plurality of constituent members of which positions in the circumferential direction of the tubular member are different from each other, and
the outlet portion is formed of a gap present between one constituent member and another constituent member adjacent to each other in the circumferential direction.

6. The conveyance device according to claim 1, further comprising:
a fixing member that is disposed at the position facing the outer peripheral surface of the tubular member, is fixed to the tubular member, supports the heating source, and is provided with the plurality of flow channels,
wherein the fixing member is provided with an inlet portion for the medium directed to the plurality of flow channels and an outlet portion for the medium having passed through the plurality of flow channels, and
the outlet portion is provided on a side opposite to a side where the inlet portion is installed with an axial center of the tubular member interposed therebetween.

7. The conveyance device according to claim 6,
wherein, in a case where an imaginary plane extending along the axial center of the tubular member and passing through both the inlet portion and the outlet portion is assumed, the plurality of flow channels are provided in each of two regions facing each other with the imaginary plane interposed therebetween.

8. The conveyance device according to claim 1,
wherein the plurality of flow channels are provided to extend along the circumferential direction of the tubular member and to be substantially parallel to each other at positions different from each other in an axial direction of the tubular member.

9. The conveyance device according to claim 1, further comprising:
a fixing member that is disposed at the position facing the outer peripheral surface of the tubular member, is fixed to the tubular member, supports the heating source, and is provided with the plurality of flow channels,
wherein a plurality of grooves are provided at a portion of the fixing member facing the outer peripheral surface, and the plurality of flow channels are formed of the plurality of grooves.

10. The conveyance device according to claim 1, further comprising:
a fixing member that is disposed at the position facing the outer peripheral surface of the tubular member, is fixed to the tubular member, is provided with the plurality of flow channels, includes the heating source therein, and includes a facing surface facing the outer peripheral surface and an opposite surface positioned on a side opposite to the facing surface; and
a supply unit that supplies the medium to the plurality of flow channels,
wherein a part of the medium directed to the plurality of flow channels by the supply unit is supplied to the opposite surface of the fixing member.

11. A heating device that heats a resin passing through a tubular member, the heating device comprising:
a heating source that is disposed at a position facing an outer peripheral surface of the tubular member and is used to heat an inside of the tubular member; and
flow channels of which at least a part is disposed on a side closer to the outer peripheral surface than the heating source in a radial direction of the tubular member and through which a medium for cooling the tubular member passes,
wherein the plurality of flow channels are disposed along a circumferential direction of the tubular member.
